# EUROPÄISCHE PATENTSCHRIFT

(11) **EP 3 785 966 B1**
(45) Veröffentlichungstag und Bekanntmachung des Hinweises auf die Patenterteilung: **15.01.2025**
(21) Anmeldenummer: 20191479.3
(22) Anmeldetag: 18.08.2020
(51) Int. Cl.: B60K 11/04, B60P 3/32, B62D 25/00, B60P 3/36

(54) **REISEFAHRZEUGVORRICHTUNG**
TRAVEL VEHICLE DEVICE
VÉHICULE DE TOURISME

(30) Priorität: 29.08.2019 DE 102019123143
(43) Veröffentlichungstag der Anmeldung: 03.03.2021
(73) Patentinhaber: Carthago Reisemobilbau GmbH, 88326 Aulendorf (DE)
(72) Erfinder:
(74) Vertreter: Daub, Thomas

(56) Entgegenhaltungen:
- EP-A1- 0 237 494
- EP-A1- 3 135 534
- EP-A1- 3 424 802
- DE-U1- 202005 011 102
- DE-U1- 202016 102 288
- US-A1- 2016 001 692

## Beschreibung

### Stand der Technik

Die Erfindung betrifft eine Reisefahrzeugvorrichtung, insbesondere eine Reisemobilvorrichtung, nach dem Oberbegriff des Anspruchs 1, ein Reisefahrzeug, insbesondere ein Reisemobil, nach dem Anspruch 7 und ein Verfahren zur Herstellung einer Reisefahrzeugvorrichtung nach dem Oberbegriff des Anspruchs 8.

Beispielsweise durch den Mercedes Sprinter vom Typ VS30 ist bereits eine Reisefahrzeugvorrichtung, insbesondere eine Reisemobilvorrichtung, mit zumindest einer Fahrerkabineneinheit, die zumindest einen Modulträger zur Aufnahme von Komponenten der Fahrerkabineneinheit und zumindest eine Kühleinheit aufweist, wobei die Kühleinheit parallel zu einer Fahrzeugvertikalrichtung betrachtet zumindest abschnittsweise unterhalb des Modulträgers angeordnet ist und wobei in einem fahrbereiten und unbeladenen Zustand zumindest eine Oberkante der Kühleinheit parallel zu der Fahrzeugvertikalrichtung betrachtet mehr als 95 cm oberhalb einer Fahrzeugaufstandsfläche angeordnet ist, bekannt.

Die Aufgabe der Erfindung besteht insbesondere darin, eine gattungsgemäße Vorrichtung und/oder ein Verfahren zur Herstellung der Vorrichtung mit verbesserten Eigenschaften hinsichtlich eines Sichtfelds in einer Fahrtrichtung und auf eine Fahrbahn bereitzustellen. Die Aufgabe wird erfindungsgemäß durch die Merkmale des Anspruchs 1, des Anspruchs 7 und/oder des Anspruchs 8 gelöst, während vorteilhafte Ausgestaltungen und Weiterbildungen der Erfindung den Unteransprüchen entnommen werden können.

### Vorteile der Erfindung

Die Erfindung geht aus von einer Reisefahrzeugvorrichtung, insbesondere von einer Reisemobilvorrichtung, mit zumindest einer Fahrerkabineneinheit, die zumindest einen Modulträger zur Aufnahme von Komponenten der Fahrerkabineneinheit und zumindest eine Kühleinheit aufweist, wobei die Kühleinheit parallel zu einer Fahrzeugvertikalrichtung betrachtet zumindest abschnittsweise unterhalb des Modulträgers angeordnet ist und wobei in einem fahrbereiten und unbeladenen Zustand zumindest eine Oberkante der Kühleinheit parallel zu der Fahrzeugvertikalrichtung betrachtet mehr als 95 cm oberhalb einer Fahrzeugaufstandsfläche angeordnet ist.

Es wird vorgeschlagen, dass in dem fahrbereiten und unbeladenen Zustand zumindest eine Oberkante des Modulträgers parallel zu der Fahrzeugvertikalrichtung betrachtet weniger als 118,5 cm oberhalb der Fahrzeugaufstandsfläche angeordnet ist. Hierdurch kann vorteilhaft ein weites Sichtfeld für einen Fahrer der Reisefahrzeugvorrichtung, insbesondere in eine Fahrtrichtung und auf eine Fahrbahn, bereitgestellt werden. Vorteilhaft kann ein kompakt ausgebildeter Modulträger bereitgestellt werden. Vorteilhaft können ein steiler Anstellwinkel einer Frontscheibe der Reisefahrzeugvorrichtung und eine niedrig angeordnete Unterkante der Frontscheibe ermöglicht werden. Vorteilhaft kann ein kurzer Bugabschnitt der Reisefahrzeugvorrichtung ermöglicht werden. Vorteilhaft kann eine niedrige Sichtfeldunterkante bereitgestellt werden. Vorteilhaft kann eine Sicht auf eine Fahrbahn in geringem Abstand von einer Fahrzeugspitze der Reisefahrzeugvorrichtung ermöglicht werden. Vorteilhaft kann eine Reisefahrzeugvorrichtung mit einer hohen Manövrierfähigkeit bereitgestellt werden. Vorteilhaft kann eine Reisefahrzeugvorrichtung mit einem hohen Fahrerkomfort und einer hohen Fahrersicherheit bereitgestellt werden. Vorteilhaft kann eine Reisefahrzeugvorrichtung mit einem ansprechenden äußeren Erscheinungsbild bereitgestellt werden.

Insbesondere umfasst ein Reisefahrzeug die Reisefahrzeugvorrichtung. Vorzugsweise ist das Reisefahrzeug als ein Reisemobil, insbesondere als ein Wohnmobil, ausgebildet. Insbesondere ist die Reisefahrzeugvorrichtung als eine Reisemobilvorrichtung, insbesondere als eine Wohnmobilvorrichtung, ausgebildet. Insbesondere weist das Reisefahrzeug eine Sitzplatzanzahl von weniger als 10 Personen auf. Insbesondere soll unter einer "Reisefahrzeugvorrichtung", insbesondere unter einer "Reisemobilvorrichtung", zumindest ein Teil, insbesondere eine Unterbaugruppe, eines Reisefahrzeugs, insbesondere eines Reisemobils, verstanden werden, wobei insbesondere zusätzlich auch Zubehöreinheiten für das Reisefahrzeug, insbesondere für das Reisemobil, umfasst sein können. Insbesondere kann die Reisefahrzeugvorrichtung, insbesondere die Reisemobilvorrichtung, auch das gesamte Reisefahrzeug, insbesondere das gesamte Reisemobil, umfassen.

Die Fahrerkabineneinheit umfasst vorzugsweise zumindest eine Fahrerkabine, in der insbesondere zumindest ein Sitzplatz für einen Fahrer des Reisefahrzeugs, insbesondere der Reisefahrzeugvorrichtung, angeordnet ist. Insbesondere können/kann in der Fahrerkabine zusätzlich zumindest ein Sitzplatz für einen Beifahrer und/oder weitere, einem Fachmann bekannte Bestandteile der Fahrerkabineneinheit, beispielsweise ein Lenkrad, ein Armaturenbrett, ein Tachometer o. dgl., angeordnet sein. Insbesondere weist die Fahrerkabine zumindest zwei Seitentüren auf. Vorzugsweise umfasst die Fahrerkabineneinheit zumindest einen Motorraum, innerhalb von dem zumindest ein Antriebsmotor der Reisefahrzeugvorrichtung, die Kühleinheit, der Modulträger und/oder weitere, einem Fachmann bekannte Bestandteile der Reisefahrzeugvorrichtung angeordnet sind. Vorzugsweise umfasst die Reisefahrzeugvorrichtung zumindest eine Vorderachse, an der insbesondere zumindest zwei Räder der Reisefahrzeugvorrichtung angeordnet sind. Vorzugsweise ist die Fahrerkabineneinheit auf der Vorderachse gelagert.

Der Modulträger ist vorzugsweise dazu vorgesehen, die Kühleinheit aufzunehmen. Insbesondere kann der Modulträger zu einer Aufnahme von weiteren Komponenten der Fahrerkabineneinheit und/oder der Reisefahrzeugvorrichtung vorgesehen sein. Insbesondere ist der Modulträger als eine Kühlerbrücke ausgebildet. Insbesondere ist die Kühleinheit an dem Modulträger fixiert. Die Kühleinheit ist vorzugsweise als ein Ladeluft- und/oder Abgaskühler ausgebildet. Vorzugsweise ist der Modulträger aus einem Metall ausgebildet. Vorzugsweise ist der Modulträger an einem Chassis der Reisefahrzeugvorrichtung, insbesondere der Fahrerkabineneinheit, fixiert. Vorzugsweise erstreckt sich der Modulträger über eine zumindest im Wesentlichen vollständige Breite der Fahrerkabineneinheit, insbesondere bis zu einer Karosserie der Reisefahrzeugvorrichtung. Insbesondere erstreckt sich der Modulträger über die Breite der Fahrerkabineneinheit zumindest abschnittsweise parallel zu einer Rotationsachse der Vorderachse. Unter "parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere verläuft die Rotationsachse der Vorderachse parallel zu einer Fahrzeugquerrichtung der Reisefahrzeugvorrichtung. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Insbesondere ist die Kühleinheit, insbesondere die Oberkante der Kühleinheit, parallel zu der Fahrzeugvertikalrichtung der Reisefahrzeugvorrichtung betrachtet unterhalb der Oberkante des Modulträgers angeordnet. Die Fahrzeugvertikalrichtung der Reisefahrzeugvorrichtung verläuft insbesondere senkrecht zu der Fahrzeugquerrichtung und zu einer Fahrzeuglängsrichtung der Reisefahrzeugvorrichtung. Die Fahrzeuglängsrichtung der Reisefahrzeugvorrichtung verläuft insbesondere parallel zu einer Geradeausfahrrichtung der Reisefahrzeugvorrichtung. Der Ausdruck "senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter einer "Oberkante" eines Objekts soll insbesondere ein Bereich des Objekts verstanden werden, in dem das Objekt, insbesondere in einem montierten Zustand, parallel zu der Fahrzeugvertikalrichtung betrachtet einen maximalen Abstand von der Fahrzeugaufstandsfläche der Reisefahrzeugvorrichtung aufweist. Unter einer "Fahrzeugaufstandsfläche" der Reisefahrzeugvorrichtung soll insbesondere eine sich senkrecht zu der Fahrzeugvertikalrichtung erstreckende Fläche verstanden werden, in der die Reisefahrzeugvorrichtung, insbesondere die Räder der Reisefahrzeugvorrichtung, auf einem Untergrund, insbesondere auf einer Fahrbahn, aufsteht/aufstehen. Vorzugsweise kann ein, insbesondere ebener, Untergrund, insbesondere eine Fahrbahn, die Fahrzeugaufstandsfläche ausbilden.

Vorzugsweise ist das Reisefahrzeug, insbesondere die Reisefahrzeugvorrichtung, in dem fahrbereiten und unbeladenen Zustand vollgetankt und frei von zusätzlicher Zuladung, insbesondere frei von Insassen. Insbesondere ist in dem fahrbereiten und unbeladenen Zustand die Oberkante der Kühleinheit parallel zu der Fahrzeugvertikalrichtung betrachtet mehr als 95 cm oberhalb der Fahrzeugaufstandsfläche, bevorzugt mehr als 100 cm oberhalb der Fahrzeugaufstandsfläche, besonders bevorzugt mehr als 105 cm oberhalb der Fahrzeugaufstandsfläche und ganz besonders bevorzugt mehr als 110 cm oberhalb der Fahrzeugaufstandsfläche angeordnet. Vorzugsweise ist in dem fahrbereiten und unbeladenen Zustand die Oberkante der Kühleinheit parallel zu der Fahrzeugvertikalrichtung betrachtet weniger als 115 cm oberhalb der Fahrzeugaufstandsfläche angeordnet.

Insbesondere ist in dem fahrbereiten und unbeladenen Zustand die Oberkante des Modulträgers parallel zu der Fahrzeugvertikalrichtung betrachtet weniger als 118,5 cm oberhalb der Fahrzeugaufstandsfläche, bevorzugt weniger als 117,5 cm oberhalb der Fahrzeugaufstandsfläche, besonders bevorzugt weniger als 116 cm oberhalb der Fahrzeugaufstandsfläche und ganz besonders bevorzugt 115 cm oberhalb der Fahrzeugaufstandsfläche angeordnet. Insbesondere ist in dem fahrbereiten und unbeladenen Zustand die Oberkante des Modulträgers zumindest 112 cm oberhalb der Fahrzeugaufstandsfläche, bevorzugt zumindest 113 cm oberhalb der Fahrzeugaufstandsfläche, besonders bevorzugt zumindest 114 cm oberhalb der Fahrzeugaufstandsfläche und ganz besonders bevorzugt 115 cm oberhalb der Fahrzeugaufstandsfläche angeordnet.

Ferner wird vorgeschlagen, dass die Fahrerkabineneinheit zumindest eine, insbesondere die vorgenannte, Frontscheibe aufweist, die sich unter einem Winkel von weniger als 34,5° relativ zu der Fahrzeugvertikalrichtung erstreckt. Die Frontscheibe ist vorzugsweise dazu vorgesehen, einem Fahrer des Reisefahrzeugs, insbesondere der Reisefahrzeugvorrichtung, ein Sichtfeld, insbesondere zumindest in Geradeausfahrrichtung und auf einen Untergrund, insbesondere auf eine Fahrbahn, bereitzustellen. Insbesondere ist die Frontscheibe transparent ausgebildet. Die Frontscheibe kann insbesondere aus einem Glas, aus einem Kunststoff o. dgl. ausgebildet sein. Insbesondere ist die Frontscheibe dazu vorgesehen, die Fahrerkabine zumindest entlang einer Frontseite der Reisefahrzeugvorrichtung zumindest abschnittsweise, insbesondere wetterfest, abzuschließen. Insbesondere weist die Frontscheibe eine Stärke zwischen 3 mm und 7 mm, bevorzugt eine Stärke von 5 mm auf. Vorzugsweise ist die Frontscheibe zumindest abschnittsweise gekrümmt, insbesondere entlang einer gedachten Umfangsrichtung um die Fahrzeugvertikalrichtung, ausgebildet. Vorzugsweise erstreckt sich die Frontscheibe unter einem weiteren Winkel von mehr als 55,5° relativ zu der Fahrzeuglängsrichtung. Insbesondere bilden der Winkel, unter dem sich die Frontscheibe relativ zu der Fahrzeugvertikalrichtung erstreckt, und der weitere Winkel, unter dem sich die Frontscheibe relativ zu der Fahrzeuglängsrichtung erstreckt, eine Winkelsumme von 90°. Insbesondere erstreckt sich die Frontscheibe unter einem Winkel von weniger als 34,5° relativ zu der Fahrzeugvertikalrichtung, bevorzugt unter einem Winkel von weniger als 33,5° relativ zu der Fahrzeugvertikalrichtung, besonders bevorzugt unter einem Winkel von weniger als 32,5° relativ zu der Fahrzeugvertikalrichtung und ganz besonders bevorzugt unter einem Winkel von 31,6° relativ zu der Fahrzeugvertikalrichtung. Insbesondere erstreckt sich die Frontscheibe unter einem Winkel von zumindest 28,5° relativ zu der Fahrzeugvertikalrichtung, bevorzugt unter einem Winkel von zumindest 29,5° relativ zu der Fahrzeugvertikalrichtung, besonders bevorzugt unter einem Winkel von zumindest 30,5° relativ zu der Fahrzeugvertikalrichtung und ganz besonders bevorzugt unter einem Winkel von 31,6° relativ zu der Fahrzeugvertikalrichtung. Vorteilhaft kann ein weites Sichtfeld auf eine Fahrbahn bereitgestellt werden. Vorteilhaft kann eine verzerrungs- und reflexionsarme Sicht durch die Frontscheibe ermöglicht werden.

Weiterhin wird vorgeschlagen, dass eine Unterkante der Frontscheibe in dem fahrbereiten und unbeladenen Zustand parallel zu der Fahrzeugvertikalrichtung betrachtet weniger als 1,41 m oberhalb der Fahrzeugaufstandsfläche angeordnet ist. Unter einer "Unterkante" eines Objekts soll insbesondere ein Bereich des Objekts verstanden werden, in dem das Objekt, insbesondere in einem montierten Zustand, parallel zu der Fahrzeugvertikalrichtung betrachtet einen minimalen Abstand von der Fahrzeugaufstandsfläche der Reisefahrzeugvorrichtung aufweist. Vorzugsweise ist die Frontscheibe an der Unterkante der Frontscheibe an dem Chassis und/oder an der Karosserie der Reisefahrzeugvorrichtung befestigt. Insbesondere ist parallel zu der Fahrzeugvertikalrichtung betrachtet unterhalb der Unterkante der Frontscheibe der Motorraum, insbesondere der Antriebsmotor, der Modulträger und die Kühleinheit, angeordnet. Insbesondere ist in dem fahrbereiten und unbeladenen Zustand die Unterkante der Frontscheibe parallel zu der Fahrzeugvertikalrichtung betrachtet weniger als 1,41 m oberhalb der Fahrzeugaufstandsfläche, bevorzugt weniger als 1,40 m oberhalb der Fahrzeugaufstandsfläche, besonders bevorzugt weniger als 1,39 m oberhalb der Fahrzeugaufstandsfläche und ganz besonders bevorzugt 1,38 m oberhalb der Fahrzeugaufstandsfläche angeordnet. Insbesondere ist in dem fahrbereiten und unbeladenen Zustand die Unterkante der Frontscheibe parallel zu der Fahrzeugvertikalrichtung betrachtet zumindest 1,35 m oberhalb der Fahrzeugaufstandsfläche, bevorzugt zumindest 1,36 m oberhalb der Fahrzeugaufstandsfläche, besonders bevorzugt zumindest 1,37 m oberhalb der Fahrzeugaufstandsfläche und ganz besonders bevorzugt zumindest 1,38 m oberhalb der Fahrzeugaufstandsfläche angeordnet. Vorteilhaft kann eine niedrige Unterkante der Frontscheibe und somit vorteilhaft eine niedrige Sichtkante aus der Fahrerkabine heraus bereitgestellt werden.

Zudem wird vorgeschlagen, dass die Frontscheibe, insbesondere parallel zu der Fahrzeuglängsrichtung, einen minimalen Abstand von kleiner als 39 cm von einer Fahrzeugspitze aufweist. Insbesondere weist die Frontscheibe an der Unterkante der Frontscheibe den minimalen Abstand von der Fahrzeugspitze der Reisefahrzeugvorrichtung auf. Die Fahrzeugspitze der Reisefahrzeugvorrichtung ist insbesondere ein parallel zu der Fahrzeuglängsrichtung betrachtet äußerster Punkt der Fahrerkabineneinheit, insbesondere einer Bugverkleidung der Fahrerkabineneinheit. Insbesondere weist die Frontscheibe, insbesondere parallel zu der Fahrzeuglängsrichtung, einen minimalen Abstand von kleiner als 39 cm von der Fahrzeugspitze, bevorzugt von kleiner als 37 cm von der Fahrzeugspitze, besonders bevorzugt von kleiner als 35 cm von der Fahrzeugspitze und ganz besonders bevorzugt von 32 cm von der Fahrzeugspitze auf. Insbesondere weist die Frontscheibe, insbesondere parallel zu der Fahrzeuglängsrichtung, einen minimalen Abstand von zumindest 26 cm von der Fahrzeugspitze, bevorzugt von zumindest 28 cm von der Fahrzeugspitze, besonders bevorzugt von zumindest 30 cm von der Fahrzeugspitze und ganz besonders bevorzugt von 32 cm von der Fahrzeugspitze auf. Vorteilhaft kann eine geringe Erstreckung der Fahrerkabineneinheit über die Frontscheibe hinaus und ein vorteilhaftes Sichtfeld auf einen Untergrund, insbesondere auf eine Fahrbahn, bereitgestellt werden.

Des Weiteren wird vorgeschlagen, dass der Modulträger derart angeordnet ist, dass eine Fahrerposition in der Fahrerkabineneinheit, insbesondere in der Fahrerkabine, einen Sichtwinkel von weniger als 75,3° relativ zu der Fahrzeugvertikalrichtung auf einen Untergrund aufweist. Unter einer "Fahrerposition" soll insbesondere eine Position innerhalb der Fahrerkabineneinheit, insbesondere innerhalb der Fahrerkabine, verstanden werden, in der sich ein Kopf, insbesondere ein Auge, eines durchschnittlich großen, insbesondere eines 1,75 m großen, Fahrers des Reisefahrzeugs, insbesondere der Reisefahrzeugvorrichtung, in einer auf einem Fahrersitz der Fahrerkabineneinheit sitzenden, insbesondere das Reisefahrzeug fahrenden, Stellung des Fahrers angeordnet ist. Der Sichtwinkel relativ zu der Fahrzeugvertikalrichtung ist insbesondere ein minimaler Winkel zwischen der Fahrzeugvertikalrichtung und einer steilstmöglichen freien Sichtlinie von der Fahrerposition auf den Untergrund, insbesondere auf eine Fahrbahn. Vorzugsweise ist der Modulträger derart angeordnet, dass die Fahrerposition in der Fahrerkabineneinheit, insbesondere in der Fahrerkabine, einen Sichtwinkel von mehr als 14,7° relativ zu der Fahrzeuglängsrichtung auf den Untergrund aufweist. Insbesondere bilden der Sichtwinkel relativ zu der Fahrzeugvertikalrichtung und der Sichtwinkel relativ zu der Fahrzeuglängsrichtung eine Winkelsumme von 90°.

Insbesondere ist der Sichtwinkel relativ zu der Fahrzeugvertikalrichtung abhängig von der Fahrerposition in der Fahrerkabineneinheit, von einer Anordnung der Frontscheibe, insbesondere von dem Abstand der Unterkante der Frontscheibe parallel zu der Fahrzeugvertikalrichtung von der Fahrzeugaufstandsfläche, und von einer maximalen Länge eines Bugbereichs der Reisefahrzeugvorrichtung, insbesondere von dem minimalen Abstand der Frontscheibe parallel zu der Fahrzeuglängsrichtung von der Fahrzeugspitze. Insbesondere sind die Anordnung der Frontscheibe, insbesondere der Abstand der Unterkante der Frontscheibe parallel zu der Fahrzeugvertikalrichtung von der Fahrzeugaufstandsfläche, und die maximale Länge des Bugbereichs der Reisefahrzeugvorrichtung, insbesondere der minimale Abstand der Frontscheibe parallel zu der Fahrzeuglängsrichtung von der Fahrzeugspitze, abhängig von einer Anordnung des Modulträgers. Insbesondere kann die Frontscheibe desto tiefer und desto steiler angeordnet sein, kann insbesondere der Abstand der Unterkante der Frontscheibe parallel zu der Fahrzeugvertikalrichtung von der Fahrzeugaufstandsfläche desto geringer sein, je geringer ein Abstand der Oberkante des Modulträgers parallel zu der Fahrzeugvertikalrichtung von der Fahrzeugaufstandsfläche ist. Insbesondere ist der Sichtwinkel relativ zu der Fahrzeugvertikalrichtung desto kleiner, insbesondere die freie Sichtlinie desto steiler, je tiefer und je steiler die Frontscheibe angeordnet ist, insbesondere je geringer der Abstand der Unterkante der Frontscheibe parallel zu der Fahrzeugvertikalrichtung von der Fahrzeugaufstandsfläche ist. Insbesondere ist der Sichtwinkel relativ zu der Fahrzeugvertikalrichtung desto kleiner, insbesondere die freie Sichtlinie desto steiler, je geringer der Abstand der Oberkante des Modulträgers parallel zu der Fahrzeugvertikalrichtung von der Fahrzeugaufstandsfläche ist. Insbesondere kann die maximale Länge des Bugbereichs der Reisefahrzeugvorrichtung, insbesondere der minimale Abstand der Frontscheibe parallel zu der Fahrzeuglängsrichtung von der Fahrzeugspitze, desto geringer sein, je geringer der Abstand der Oberkante des Modulträgers parallel zu der Fahrzeugvertikalrichtung von der Fahrzeugaufstandsfläche ist. Insbesondere ist der Sichtwinkel relativ zu der Fahrzeugvertikalrichtung desto kleiner, insbesondere die freie Sichtlinie desto steiler, je geringer die maximale Länge des Bugbereichs der Reisefahrzeugvorrichtung, insbesondere der minimale Abstand der Frontscheibe parallel zu der Fahrzeuglängsrichtung von der Fahrzeugspitze, ist. Insbesondere ist der Sichtwinkel relativ zu der Fahrzeugvertikalrichtung desto kleiner, insbesondere die freie Sichtlinie desto steiler, je geringer der Abstand der Oberkante des Modulträgers parallel zu der Fahrzeugvertikalrichtung von der Fahrzeugaufstandsfläche ist.

Insbesondere ist der Modulträger derart angeordnet, dass die Fahrerposition in der Fahrerkabineneinheit, insbesondere in der Fahrerkabine, einen Sichtwinkel von weniger als 75,3° relativ zu der Fahrzeugvertikalrichtung auf einen Untergrund, bevorzugt einen Sichtwinkel von weniger als 74° relativ zu der Fahrzeugvertikalrichtung auf den Untergrund, besonders bevorzugt einen Sichtwinkel von weniger als 73° relativ zu der Fahrzeugvertikalrichtung auf den Untergrund und ganz besonders bevorzugt einen Sichtwinkel von 72,9° relativ zu der Fahrzeugvertikalrichtung auf den Untergrund aufweist. Insbesondere ist der Modulträger derart angeordnet, dass die Fahrerposition in der Fahrerkabineneinheit, insbesondere in der Fahrerkabine, einen Sichtwinkel von zumindest 70° relativ zu der Fahrzeugvertikalrichtung auf den Untergrund, bevorzugt einen Sichtwinkel von zumindest 71° relativ zu der Fahrzeugvertikalrichtung auf den Untergrund, besonders bevorzugt einen Sichtwinkel von zumindest 72° relativ zu der Fahrzeugvertikalrichtung auf den Untergrund und ganz besonders bevorzugt einen Sichtwinkel von 72,9° relativ zu der Fahrzeugvertikalrichtung auf den Untergrund aufweist.

Es kann ein vorteilhafter Sichtwinkel und eine für einen Fahrer vorteilhaft übersichtliche Reisefahrzeugvorrichtung bereitgestellt werden.

Ferner wird vorgeschlagen, dass der Modulträger derart angeordnet ist, dass von der Fahrerposition aus entlang einer, insbesondere entlang der vorgenannten, Fahrzeuglängsrichtung betrachtet in einem Abstand von weniger als 7 m von der Fahrerposition in der Fahrerkabineneinheit der Untergrund sichtbar ist. Insbesondere ist der Abstand von der Fahrerposition entlang der Fahrzeuglängsrichtung, in dem von der Fahrerposition aus der Untergrund sichtbar ist, desto geringer, je kleiner der Sichtwinkel relativ zu der Fahrzeugvertikalrichtung, insbesondere je steiler die freie Sichtlinie von der Fahrerposition, ist. Insbesondere ist der Abstand von der Fahrerposition entlang der Fahrzeuglängsrichtung, in dem von der Fahrerposition aus der Untergrund sichtbar ist, desto geringer, je geringer der Abstand der Oberkante des Modulträgers parallel zu der Fahrzeugvertikalrichtung von der Fahrzeugaufstandsfläche ist. Insbesondere ist der Modulträger derart angeordnet, dass von der Fahrerposition aus entlang der Fahrzeuglängsrichtung betrachtet in einem Abstand von weniger als 7 m von der Fahrerposition, bevorzugt in einem Abstand von weniger als 6,7 m von der Fahrerposition, besonders bevorzugt in einem Abstand von weniger als 6,3 m von der Fahrerposition und ganz besonders bevorzugt in einem Abstand von 6 m von der Fahrerposition der Untergrund sichtbar ist. Insbesondere ist der Modulträger derart angeordnet, dass von der Fahrerposition aus entlang der Fahrzeuglängsrichtung betrachtet in einem Abstand von zumindest 5 m von der Fahrerposition, bevorzugt in einem Abstand von zumindest 5,3 m von der Fahrerposition, besonders bevorzugt in einem Abstand von zumindest 5,6 m von der Fahrerposition und ganz besonders bevorzugt in einem Abstand von 6 m von der Fahrerposition der Untergrund sichtbar ist. Es kann in einem vorteilhaft kurzen Abstand von der Fahrerposition eine Sicht auf einen Untergrund, insbesondere auf eine Fahrbahn, ermöglicht werden.

Weiterhin geht die Erfindung aus von einem Reisefahrzeug, insbesondere von einem Reisemobil, mit zumindest einer erfindungsgemäßen Reisefahrzeugvorrichtung. Das Reisefahrzeug kann insbesondere als ein Alkovenmobil, als ein Kastenwagen, als ein Van, als ein teilintegriertes Reisemobil, bevorzugt als ein vollintegriertes Reisemobil oder als ein anderes, einem Fachmann als sinnvoll erscheinendes Reisefahrzeug ausgebildet sein. Vorzugsweise kann das Reisefahrzeug zusätzlich zu der Reisefahrzeugvorrichtung zumindest einen Wohnbereich, insbesondere mit zumindest einer Sanitäreinheit und/oder mit zumindest einer Schlafeinheit, zumindest einen Stauraum, insbesondere eine Heckgarage und/oder einen Unterbodenstauraum, zumindest eine Hinterachse und/oder weitere, einem Fachmann als sinnvoll erscheinende Komponenten aufweisen. Alternativ ist vorstellbar, dass die Reisefahrzeugvorrichtung das gesamte Reisefahrzeug ausbildet und insbesondere den zumindest einen Wohnbereich, den zumindest einen Stauraum, die zumindest eine Hinterachse und/oder weitere, einem Fachmann als sinnvoll erscheinende Komponenten aufweist. Vorteilhaft kann ein Reisefahrzeug mit einem weiten Sichtfeld für einen Fahrer des Reisefahrzeugs, insbesondere in eine Fahrtrichtung und auf eine Fahrbahn, bereitgestellt werden. Vorteilhaft kann ein Reisefahrzeug mit einem hohen Fahrerkomfort und einer hohen Fahrersicherheit bereitgestellt werden. Vorteilhaft kann ein Reisefahrzeug mit einem ansprechenden äußeren Erscheinungsbild bereitgestellt werden.

Zudem geht die Erfindung aus von einem Verfahren zur Herstellung einer erfindungsgemäßen Reisefahrzeugvorrichtung, insbesondere eines Modulträgers einer erfindungsgemäßen Reisefahrzeugvorrichtung.

Es wird vorgeschlagen, dass in zumindest einem Verfahrensschritt zumindest ein Modifikationsbauteil, insbesondere zumindest ein Versteifungselement, an zumindest einem Modulträgergrundkörper befestigt wird. Vorzugsweise wird das Modifikationsbauteil in einem Kühleinheitaufnahmebereich des Modulträgergrundkörpers befestigt, bildet insbesondere einen Kühleinheitaufnahmebereich des Modulträgers aus. Vorzugsweise ist der Modulträger dazu vorgesehen, die Kühleinheit in dem Kühleinheitaufnahmebereich aufzunehmen. Vorzugsweise ist die Kühleinheit zumindest abschnittsweise an, insbesondere entlang der Fahrzeugvertikalrichtung betrachtet zumindest abschnittsweise unterhalb von dem Modifikationsbauteil, angeordnet. Bevorzugt ist das Modifikationsbauteil als ein Versteifungselement ausgebildet, insbesondere dazu vorgesehen, den Modulträger zu versteifen. Insbesondere ist das Modifikationsbauteil zumindest teilweise aus einem Stahl, aus einem Aluminium, aus einem Verbundwerkstoff, insbesondere aus einem Kohlefaserverbundwerkstoff, oder aus einem anderen, einem Fachmann als sinnvoll erscheinenden Werkstoff ausgebildet. Vorzugsweise ersetzt das Modifikationsbauteil zumindest einen Teil des Modulträgergrundkörpers. Vorzugsweise ist das Modifikationsbauteil steifer ausgebildet als der Teil des Modulträgergrundkörpers, den das Modifikationsbauteil ersetzt. Vorzugsweise weist das Modifikationsbauteil parallel zu der Fahrzeugvertikalrichtung betrachtet eine geringere maximale Erstreckung auf als der Teil des Modulträgergrundkörpers, den das Modifikationsbauteil ersetzt. Insbesondere bildet eine Oberkante des Modifikationsbauteils die Oberkante des Modulträgers. Vorzugsweise wird das Modifikationsbauteil stoffschlüssig mit dem Modulträgergrundkörper verbunden, insbesondere mit dem Modulträgergrundkörper verschweißt. Alternativ oder zusätzlich ist vorstellbar, dass das Modifikationsbauteil formschlüssig mit dem Modulträgergrundkörper verbunden wird, insbesondere mit dem Modulträgergrundkörper verschraubt, vernietet o. dgl. wird. Vorzugsweise wird das Modifikationsbauteil an zumindest zwei Seitenteilen des Modulträgergrundkörpers befestigt. Insbesondere werden die zumindest zwei Seitenteile des Modulträgergrundkörpers an zumindest zwei voneinander abgewandten Endbereichen des Modifikationsbauteils befestigt. Vorzugsweise ist das Modifikationsbauteil dazu vorgesehen, die zumindest zwei Seitenteile des Modulträgergrundkörpers zu verbinden. Vorteilhaft kann ein effizientes Verfahren zu einer vorteilhaften Modifikation, insbesondere Verkleinerung, eines Modulträgergrundkörpers bereitgestellt werden.

Des Weiteren wird vorgeschlagen, dass in zumindest einem Verfahrensschritt der Modulträgergrundkörper nach einem Umformprozess beschnitten wird. Vorzugsweise bleibt der Modulträgergrundkörper nach einem Beschneiden frei von Umformungen. Insbesondere wird zumindest ein Teil des Modulträgergrundkörpers herausgeschnitten, insbesondere von dem Modulträgergrundkörper entfernt. Vorzugsweise wird der Modulträgergrundkörper in dem Kühleinheitaufnahmebereich beschnitten. Insbesondere wird der Teil des Modulträgergrundkörpers entfernt, der von dem Modifikationsbauteil ersetzt wird. Insbesondere erfolgt der Verfahrensschritt, in dem der Modulträgergrundkörper beschnitten wird, vor dem Verfahrensschritt, in dem das Modifikationsbauteil an dem Modulträgergrundkörper befestigt wird. Insbesondere wird das Modifikationsbauteil in einer endgültigen Form an dem Modulträgergrundkörper befestigt, insbesondere nach einer Befestigung an dem Modulträgergrundkörper nicht mehr beschnitten. Vorteilhaft kann effizient ein Bereich an dem Modulträgergrundkörper zu einer Befestigung des Modifikationsbauteils geschaffen werden.

Es kann ein vorteilhaft kompakt und versteift ausgebildeter Modulträger bereitgestellt werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 4: einen Modulträger einer erfindungsgemäßen Reisefahrzeugvorrichtung des erfindungsgemäßen Reisefahrzeugs aus Fig. 1 in einer perspektivischen schematischen Darstellung und
- Fig. 5: ein Ablaufdiagramm eines erfindungsgemäßen Verfahrens zur Herstellung der erfindungsgemäßen Reisefahrzeugvorrichtung in einer schematischen Darstellung.

### Beschreibung des Ausführungsbeispiels

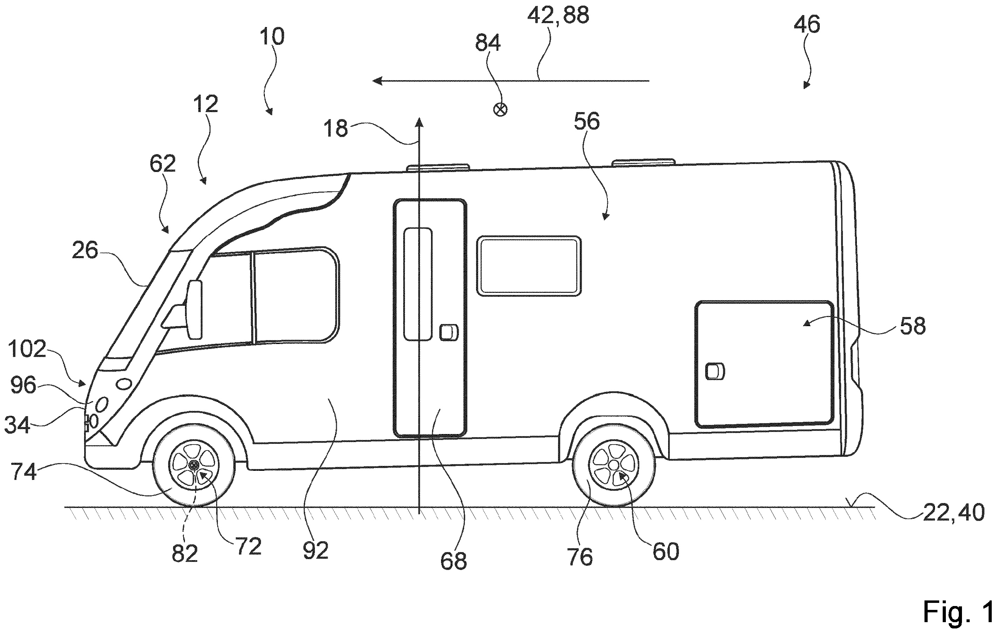

Figur 1 zeigt eine Seitenansicht eines Reisefahrzeugs 46, insbesondere eines Reisemobils, mit zumindest einer Reisefahrzeugvorrichtung 10 in einer schematischen Darstellung. Das Reisefahrzeug 46 kann als ein Alkovenmobil, als ein Kastenwagen, als ein Van, als ein teilintegriertes Reisemobil, bevorzugt als ein vollintegriertes Reisemobil oder als ein anderes, einem Fachmann als sinnvoll erscheinendes Reisefahrzeug ausgebildet sein. Im vorliegenden Ausführungsbeispiel ist das Reisefahrzeug 46 beispielhaft als ein vollintegriertes Wohnmobil ausgebildet. Das Reisefahrzeug 46 kann zusätzlich zu der Reisefahrzeugvorrichtung 10 zumindest einen Wohnbereich 56, insbesondere mit zumindest einer Sanitäreinheit und/oder mit zumindest einer Schlafeinheit, zumindest einen Stauraum 58, insbesondere eine Heckgarage und/oder einen Unterbodenstauraum, zumindest eine Hinterachse 60 und/oder weitere, einem Fachmann als sinnvoll erscheinende Komponenten aufweisen. Alternativ ist vorstellbar, dass die Reisefahrzeugvorrichtung 10 das gesamte Reisefahrzeug 46 ausbildet und insbesondere den zumindest einen Wohnbereich 56, den zumindest einen Stauraum 58, die zumindest eine Hinterachse 60 und/oder weitere, einem Fachmann als sinnvoll erscheinende Komponenten aufweist. Die Reisefahrzeugvorrichtung 10 kann in einer alternativen Ausgestaltungsform auch das gesamte Reisefahrzeug 46, insbesondere das gesamte Reisemobil, umfassen. Die Reisefahrzeugvorrichtung 10 ist als eine Reisemobilvorrichtung, insbesondere als eine Wohnmobilvorrichtung, ausgebildet. Das Reisefahrzeug 46 weist eine Sitzplatzanzahl von weniger als 10 Personen auf.

Die Reisefahrzeugvorrichtung 10 umfasst zumindest eine Fahrerkabineneinheit 12. Die Fahrerkabineneinheit 12 umfasst zumindest eine Fahrerkabine 62, in der insbesondere zumindest ein Sitzplatz für einen Fahrer 64 des Reisefahrzeugs 46, insbesondere der Lenkrad 66, ein Armaturenbrett, ein Tachometer o. dgl., angeordnet sein. Die Fahrerkabine 62 weist zumindest zwei Seitentüren 68 auf. Die Fahrerkabineneinheit 12 umfasst zumindest einen Motorraum 70, innerhalb von dem zumindest ein Antriebsmotor der Reisefahrzeugvorrichtung 10, eine Kühleinheit 16, ein Modulträger 14 und/oder weitere, einem Fachmann bekannte Bestandteile der Reisefahrzeugvorrichtung 10 angeordnet sind. Die Reisefahrzeugvorrichtung 10 umfasst zumindest eine Vorderachse 72, an der insbesondere zumindest zwei Räder 74 der Reisefahrzeugvorrichtung 10 angeordnet sind. Die Fahrerkabineneinheit 12 ist auf der Vorderachse 72 gelagert. An der Hinterachse 60 sind zumindest zwei weitere Räder 76 des Reisefahrzeugs 46 angeordnet.

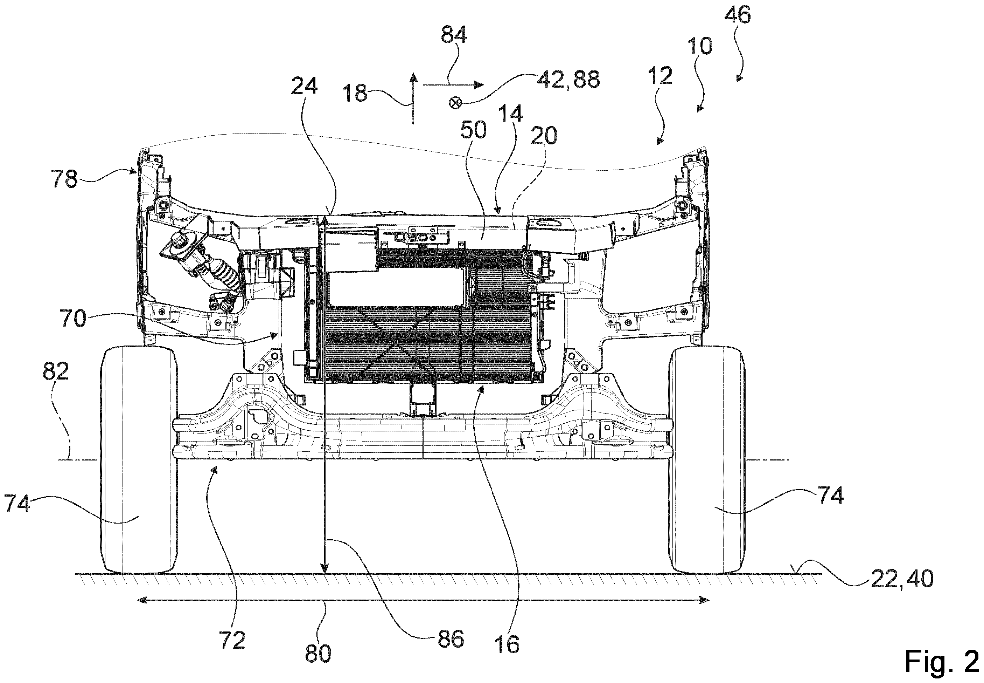

Figur 2 zeigt eine Frontansicht eines Teils des Reisefahrzeugs 46 aus Fig. 1 in einer schematischen Schnittdarstellung. Es ist ein Inneres des Motorraums 70 dargestellt. Die Fahrerkabineneinheit 12 weist zumindest einen, insbesondere den vorgenannten, Modulträger 14 zur Aufnahme von Komponenten der Fahrerkabineneinheit 12 und zumindest eine, insbesondere die vorgenannte, Kühleinheit 16 auf, wobei die Kühleinheit 16 parallel zu einer Fahrzeugvertikalrichtung 18 betrachtet zumindest abschnittsweise unterhalb des Modulträgers 14 angeordnet ist und wobei in einem fahrbereiten und unbeladenen Zustand zumindest eine Oberkante 20 der Kühleinheit 16 parallel zu der Fahrzeugvertikalrichtung 18 betrachtet mehr als 95 cm oberhalb einer Fahrzeugaufstandsfläche 22 angeordnet ist. In dem fahrbereiten und unbeladenen Zustand ist zumindest eine Oberkante 24 des Modulträgers 14 parallel zu der Fahrzeugvertikalrichtung 18 betrachtet weniger als 118,5 cm oberhalb der Fahrzeugaufstandsfläche 22 angeordnet. Der Modulträger 14 ist dazu vorgesehen, die Kühleinheit 16 aufzunehmen. Der Modulträger 14 kann zu einer Aufnahme von weiteren Komponenten der Fahrerkabineneinheit 12 und/oder der Reisefahrzeugvorrichtung 10 vorgesehen sein. Der Modulträger 14 ist als eine Kühlerbrücke ausgebildet. Die Kühleinheit 16 ist an dem Modulträger 14 fixiert. Die Kühleinheit 16 ist als ein Ladeluft- und/oder Abgaskühler ausgebildet. Der Modulträger 14 ist aus einem Metall ausgebildet. Der Modulträger 14 ist an einem Chassis 78 der Reisefahrzeugvorrichtung 10, insbesondere der Fahrerkabineneinheit 12, fixiert. Der Modulträger 14 erstreckt sich über eine zumindest im Wesentlichen vollständige Breite 80 der Fahrerkabineneinheit 12, insbesondere bis zu einer Karosserie 92 der Reisefahrzeugvorrichtung 10 (hier nicht dargestellt). Der Modulträger 14 erstreckt sich über die Breite 80 der Fahrerkabineneinheit 12 zumindest abschnittsweise parallel zu einer Rotationsachse 82 der Vorderachse 72. Die Rotationsachse 82 der Vorderachse 72 verläuft parallel zu einer Fahrzeugquerrichtung 84 der Reisefahrzeugvorrichtung 10.

Die Kühleinheit 16, insbesondere die Oberkante 20 der Kühleinheit 16, ist parallel zu der Fahrzeugvertikalrichtung 18 der Reisefahrzeugvorrichtung 10 betrachtet unterhalb der Oberkante 24 des Modulträgers 14 angeordnet. Die Fahrzeugvertikalrichtung 18 der Reisefahrzeugvorrichtung 10 verläuft senkrecht zu der Fahrzeugquerrichtung 84 und zu einer Fahrzeuglängsrichtung 42 der Reisefahrzeugvorrichtung 10. Die Fahrzeuglängsrichtung 42 der Reisefahrzeugvorrichtung 10 verläuft insbesondere parallel zu einer Geradeausfahrrichtung 88 der Reisefahrzeugvorrichtung 10. Ein, insbesondere ebener, Untergrund 40, insbesondere eine Fahrbahn, kann die Fahrzeugaufstandsfläche 22 ausbilden.

Das Reisefahrzeug 46, insbesondere die Reisefahrzeugvorrichtung 10, ist in dem fahrbereiten und unbeladenen Zustand vollgetankt und frei von zusätzlicher Zuladung, insbesondere frei von Insassen. Insbesondere ist in dem fahrbereiten und unbeladenen Zustand die Oberkante 20 der Kühleinheit 16 parallel zu der Fahrzeugvertikalrichtung 18 betrachtet mehr als 95 cm oberhalb der Fahrzeugaufstandsfläche 22, bevorzugt mehr als 100 cm oberhalb der Fahrzeugaufstandsfläche 22, besonders bevorzugt mehr als 105 cm oberhalb der Fahrzeugaufstandsfläche 22 und ganz besonders bevorzugt mehr als 110 cm oberhalb der Fahrzeugaufstandsfläche 22 angeordnet. Vorzugsweise ist in dem fahrbereiten und unbeladenen Zustand die Oberkante 20 der Kühleinheit 16 parallel zu der Fahrzeugvertikalrichtung 18 betrachtet weniger als 115 cm oberhalb der Fahrzeugaufstandsfläche 22 angeordnet.

Insbesondere ist in dem fahrbereiten und unbeladenen Zustand die Oberkante 24 des Modulträgers 14 parallel zu der Fahrzeugvertikalrichtung 18 betrachtet weniger als 118,5 cm oberhalb der Fahrzeugaufstandsfläche 22, bevorzugt weniger als 117,5 cm oberhalb der Fahrzeugaufstandsfläche 22, besonders bevorzugt weniger als 116 cm oberhalb der Fahrzeugaufstandsfläche 22 und ganz besonders bevorzugt 115 cm oberhalb der Fahrzeugaufstandsfläche 22 angeordnet, wie beispielhaft im vorliegenden Ausführungsbeispiel. Insbesondere ist in dem fahrbereiten und unbeladenen Zustand die Oberkante 24 des Modulträgers 14 zumindest 112 cm oberhalb der Fahrzeugaufstandsfläche 22, bevorzugt zumindest 113 cm oberhalb der Fahrzeugaufstandsfläche 22, besonders bevorzugt zumindest 114 cm oberhalb der Fahrzeugaufstandsfläche 22 und ganz besonders bevorzugt 115 cm oberhalb der Fahrzeugaufstandsfläche 22 angeordnet, wie beispielhaft im vorliegenden Ausführungsbeispiel. In Figur 2 ist der Übersichtlichkeit halber ein Abstand 86 der Oberkante 24 des Modulträgers 14 von der Fahrzeugaufstandsfläche 22 parallel zu der Fahrzeugvertikalrichtung 18 betrachtet gekennzeichnet.

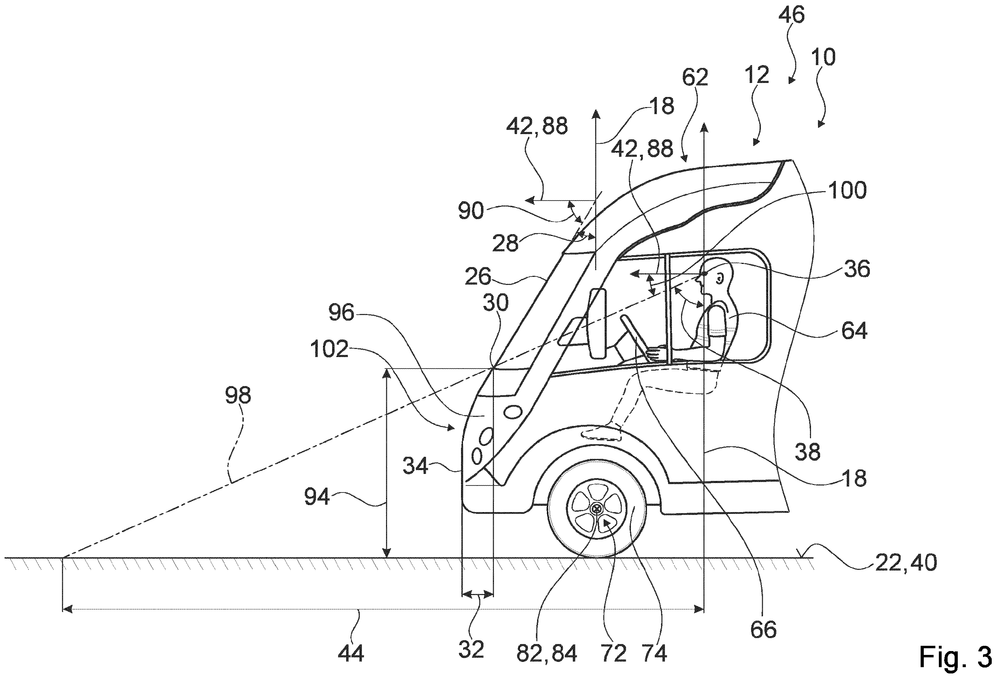

Figur 3 zeigt eine Seitenansicht eines Teils des Reisefahrzeugs 46 aus Fig. 1, insbesondere der Reisefahrzeugvorrichtung 10, in einer schematischen Darstellung. Die Fahrerkabineneinheit 12 weist zumindest eine Frontscheibe 26 auf, die sich unter einem Winkel 28 von weniger als 34,5° relativ zu der Fahrzeugvertikalrichtung 18 erstreckt. Die Frontscheibe 26 ist dazu vorgesehen, einem Fahrer 64 des Reisefahrzeugs 46, insbesondere der Reisefahrzeugvorrichtung 10, ein Sichtfeld, insbesondere zumindest in Geradeausfahrrichtung 88 und auf einen Untergrund 40, insbesondere auf eine Fahrbahn, bereitzustellen. Die Frontscheibe 26 ist transparent ausgebildet. Die Frontscheibe 26 kann aus einem Glas, aus einem Kunststoff o. dgl. ausgebildet sein. Die Frontscheibe 26 ist dazu vorgesehen, die Fahrerkabine 62 zumindest entlang einer Frontseite der Reisefahrzeugvorrichtung 10 zumindest abschnittsweise, insbesondere wetterfest, abzuschließen. Insbesondere weist die Frontscheibe 26 eine Stärke zwischen 3 mm und 7 mm, bevorzugt eine Stärke von 5 mm auf. Die Frontscheibe 26 ist zumindest abschnittsweise gekrümmt, insbesondere entlang einer gedachten Umfangsrichtung um die Fahrzeugvertikalrichtung 18, ausgebildet. Die Frontscheibe 26 erstreckt sich unter einem weiteren Winkel 90 von mehr als 55,5° relativ zu der Fahrzeuglängsrichtung 42. Der Winkel 28, unter dem sich die Frontscheibe 26 relativ zu der Fahrzeugvertikalrichtung 18 erstreckt, und der weitere Winkel 90, unter dem sich die Frontscheibe 26 relativ zu der Fahrzeuglängsrichtung 42 erstreckt, bilden eine Winkelsumme von 90°. Insbesondere erstreckt sich die Frontscheibe 26 unter einem Winkel 28 von weniger als 34,5° relativ zu der Fahrzeugvertikalrichtung 18, bevorzugt unter einem Winkel 28 von weniger als 33,5° relativ zu der Fahrzeugvertikalrichtung 18, besonders bevorzugt unter einem Winkel 28 von weniger als 32,5° relativ zu der Fahrzeugvertikalrichtung 18 und ganz besonders bevorzugt unter einem Winkel 28 von 31,6° relativ zu der Fahrzeugvertikalrichtung 18, wie beispielhaft im vorliegenden Ausführungsbeispiel. Insbesondere erstreckt sich die Frontscheibe 26 unter einem Winkel 28 von zumindest 28,5° relativ zu der Fahrzeugvertikalrichtung 18, bevorzugt unter einem Winkel 28 von zumindest 29,5° relativ zu der Fahrzeugvertikalrichtung 18, besonders bevorzugt unter einem Winkel 28 von zumindest 30,5° relativ zu der Fahrzeugvertikalrichtung 18 und ganz besonders bevorzugt unter einem Winkel 28 von 31,6° relativ zu der Fahrzeugvertikalrichtung 18, wie beispielhaft im vorliegenden Ausführungsbeispiel.

Eine Unterkante 30 der Frontscheibe 26 ist in dem fahrbereiten und unbeladenen Zustand parallel zu der Fahrzeugvertikalrichtung 18 betrachtet weniger als 1,41 m oberhalb der Fahrzeugaufstandsfläche 22 angeordnet. Die Frontscheibe 26 ist an der Unterkante 30 der Frontscheibe 26 an dem Chassis 78 und/oder an einer Karosserie 92 der Reisefahrzeugvorrichtung 10 befestigt. Parallel zu der Fahrzeugvertikalrichtung 18 betrachtet ist unterhalb der Unterkante 30 der Frontscheibe 26 der Motorraum 70, insbesondere der Antriebsmotor, der Modulträger 14 und die Kühleinheit 16, angeordnet. Insbesondere ist in dem fahrbereiten und unbeladenen Zustand die Unterkante 30 der Frontscheibe 26 parallel zu der Fahrzeugvertikalrichtung 18 betrachtet weniger als 1,41 m oberhalb der Fahrzeugaufstandsfläche 22, bevorzugt weniger als 1,40 m oberhalb der Fahrzeugaufstandsfläche 22, besonders bevorzugt weniger als 1,39 m oberhalb der Fahrzeugaufstandsfläche 22 und ganz besonders bevorzugt 1,38 m oberhalb der Fahrzeugaufstandsfläche 22 angeordnet, wie beispielhaft im vorliegenden Ausführungsbeispiel. Insbesondere ist in dem fahrbereiten und unbeladenen Zustand die Unterkante 30 der Frontscheibe 26 parallel zu der Fahrzeugvertikalrichtung 18 betrachtet zumindest 1,35 m oberhalb der Fahrzeugaufstandsfläche 22, bevorzugt zumindest 1,36 m oberhalb der Fahrzeugaufstandsfläche 22, besonders bevorzugt zumindest 1,37 m oberhalb der Fahrzeugaufstandsfläche 22 und ganz besonders bevorzugt zumindest 1,38 m oberhalb der Fahrzeugaufstandsfläche 22 angeordnet, wie beispielhaft im vorliegenden Ausführungsbeispiel. In Figur 3 ist der Übersichtlichkeit halber ein Abstand 94 der Unterkante 30 der Frontscheibe 26 von der Fahrzeugaufstandsfläche 22 parallel zu der Fahrzeugvertikalrichtung 18 betrachtet gekennzeichnet.

Die Frontscheibe 26 weist, insbesondere parallel zu der Fahrzeuglängsrichtung 42, einen minimalen Abstand 32 von kleiner als 39 cm von einer Fahrzeugspitze 34 auf. Die Frontscheibe 26 weist an der Unterkante 30 der Frontscheibe 26 den minimalen Abstand 32 von der Fahrzeugspitze 34 der Reisefahrzeugvorrichtung 10 auf. Die Fahrzeugspitze 34 der Reisefahrzeugvorrichtung 10 ist ein parallel zu der Fahrzeuglängsrichtung 42 betrachtet äußerster Punkt der Fahrerkabineneinheit 12, insbesondere einer Bugverkleidung 96 der Fahrerkabineneinheit 12. Insbesondere weist die Frontscheibe 26, insbesondere parallel zu der Fahrzeuglängsrichtung 42, einen minimalen Abstand 32 von kleiner als 39 cm von der Fahrzeugspitze 34, bevorzugt von kleiner als 37 cm von der Fahrzeugspitze 34, besonders bevorzugt von kleiner als 35 cm von der Fahrzeugspitze 34 und ganz besonders bevorzugt von 32 cm von der Fahrzeugspitze 34 auf, wie beispielhaft im vorliegenden Ausführungsbeispiel. Insbesondere weist die Frontscheibe 26, insbesondere parallel zu der Fahrzeuglängsrichtung 42, einen minimalen Abstand 32 von zumindest 26 cm von der Fahrzeugspitze 34, bevorzugt von zumindest 28 cm von der Fahrzeugspitze 34, besonders bevorzugt von zumindest 30 cm von der Fahrzeugspitze 34 und ganz besonders bevorzugt von 32 cm von der Fahrzeugspitze 34 auf, wie beispielhaft im vorliegenden Ausführungsbeispiel.

Der Modulträger 14 ist derart angeordnet, dass eine Fahrerposition 36 in der Fahrerkabineneinheit 12, insbesondere in der Fahrerkabine 62, einen Sichtwinkel 38 von weniger als 75,3° relativ zu der Fahrzeugvertikalrichtung 18 auf einen Untergrund 40 aufweist. Der Sichtwinkel 38 relativ zu der Fahrzeugvertikalrichtung 18 ist ein minimaler Winkel zwischen der Fahrzeugvertikalrichtung 18 und einer steilstmöglichen freien Sichtlinie 98 von der Fahrerposition 36 auf den Untergrund 40, insbesondere auf eine Fahrbahn. Der Modulträger 14 ist derart angeordnet, dass die Fahrerposition 36 in der Fahrerkabineneinheit 12, insbesondere in der Fahrerkabine 62, einen Sichtwinkel 100 von mehr als 14,7° relativ zu der Fahrzeuglängsrichtung 42 auf den Untergrund 40 aufweist. Der Sichtwinkel 38 relativ zu der Fahrzeugvertikalrichtung 18 und der Sichtwinkel 100 relativ zu der Fahrzeuglängsrichtung 42 bilden eine Winkelsumme von 90°.

Der Sichtwinkel 38 relativ zu der Fahrzeugvertikalrichtung 18 ist abhängig von der Fahrerposition 36 in der Fahrerkabineneinheit 12, von einer Anordnung der Frontscheibe 26, insbesondere von dem Abstand 94 der Unterkante 30 der Frontscheibe 26 parallel zu der Fahrzeugvertikalrichtung 18 von der Fahrzeugaufstandsfläche 22, und von einer maximalen Länge eines Bugbereichs 102 der Reisefahrzeugvorrichtung 10, insbesondere von dem minimalen Abstand 32 der Frontscheibe 26 parallel zu der Fahrzeuglängsrichtung 42 von der Fahrzeugspitze 34. Die Anordnung der Frontscheibe 26, insbesondere der Abstand 94 der Unterkante 30 der Frontscheibe 26 parallel zu der Fahrzeugvertikalrichtung 18 von der Fahrzeugaufstandsfläche 22, und die maximale Länge des Bugbereichs 102 der Reisefahrzeugvorrichtung 10, insbesondere der minimale Abstand 32 der Frontscheibe 26 parallel zu der Fahrzeuglängsrichtung 42 von der Fahrzeugspitze 34, sind abhängig von einer Anordnung des Modulträgers 14. Die Frontscheibe 26 kann desto tiefer und desto steiler angeordnet sein, insbesondere kann der Abstand 94 der Unterkante 30 der Frontscheibe 26 parallel zu der Fahrzeugvertikalrichtung 18 von der Fahrzeugaufstandsfläche 22 desto geringer sein, je geringer der Abstand 86 der Oberkante 24 des Modulträgers 14 parallel zu der Fahrzeugvertikalrichtung 18 von der Fahrzeugaufstandsfläche 22 ist. Der Sichtwinkel 38 relativ zu der Fahrzeugvertikalrichtung 18 ist desto kleiner, insbesondere ist die freie Sichtlinie 98 desto steiler, je tiefer und je steiler die Frontscheibe 26 angeordnet ist, insbesondere je geringer der Abstand 94 der Unterkante 30 der Frontscheibe 26 parallel zu der Fahrzeugvertikalrichtung 18 von der Fahrzeugaufstandsfläche 22 ist. Der Sichtwinkel 38 relativ zu der Fahrzeugvertikalrichtung 18 ist desto kleiner, insbesondere ist die freie Sichtlinie 98 desto steiler, je geringer der Abstand 86 der Oberkante 24 des Modulträgers 14 parallel zu der Fahrzeugvertikalrichtung 18 von der Fahrzeugaufstandsfläche 22 ist. Die maximale Länge des Bugbereichs 102 der Reisefahrzeugvorrichtung 10, insbesondere der minimale Abstand 32 der Frontscheibe 26 parallel zu der Fahrzeuglängsrichtung 42 von der Fahrzeugspitze 34, kann desto geringer sein, je geringer der Abstand 86 der Oberkante 24 des Modulträgers 14 parallel zu der Fahrzeugvertikalrichtung 18 von der Fahrzeugaufstandsfläche 22 ist. Der Sichtwinkel 38 relativ zu der Fahrzeugvertikalrichtung 18 ist desto kleiner, insbesondere ist die freie Sichtlinie 98 desto steiler, je geringer die maximale Länge des Bugbereichs 102 der Reisefahrzeugvorrichtung 10, insbesondere der minimale Abstand 32 der Frontscheibe 26 parallel zu der Fahrzeuglängsrichtung 42 von der Fahrzeugspitze 34, ist. Der Sichtwinkel 38 relativ zu der Fahrzeugvertikalrichtung 18 ist desto kleiner, insbesondere ist die freie Sichtlinie 98 desto steiler, je geringer der Abstand 86 der Oberkante 24 des Modulträgers 14 parallel zu der Fahrzeugvertikalrichtung 18 von der Fahrzeugaufstandsfläche 22 ist.

Insbesondere ist der Modulträger 14 derart angeordnet, dass die Fahrerposition 36 in der Fahrerkabineneinheit 12, insbesondere in der Fahrerkabine 62, einen Sichtwinkel 38 von weniger als 75,3° relativ zu der Fahrzeugvertikalrichtung 18 auf einen Untergrund 40, bevorzugt einen Sichtwinkel 38 von weniger als 74° relativ zu der Fahrzeugvertikalrichtung 18 auf den Untergrund 40, besonders bevorzugt einen Sichtwinkel 38 von weniger als 73° relativ zu der Fahrzeugvertikalrichtung 18 auf den Untergrund 40 und ganz besonders bevorzugt einen Sichtwinkel 38 von 72,9° relativ zu der Fahrzeugvertikalrichtung 18 auf den Untergrund 40, wie beispielhaft im vorliegenden Ausführungsbeispiel, aufweist. Insbesondere ist der Modulträger 14 derart angeordnet, dass die Fahrerposition 36 in der Fahrerkabineneinheit 12, insbesondere in der Fahrerkabine 62, einen Sichtwinkel 38 von zumindest 70° relativ zu der Fahrzeugvertikalrichtung 18 auf den Untergrund 40, bevorzugt einen Sichtwinkel 38 von zumindest 71° relativ zu der Fahrzeugvertikalrichtung 18 auf den Untergrund 40, besonders bevorzugt einen Sichtwinkel 38 von zumindest 72° relativ zu der Fahrzeugvertikalrichtung 18 auf den Untergrund 40 und ganz besonders bevorzugt einen Sichtwinkel 38 von 72,9° relativ zu der Fahrzeugvertikalrichtung 18 auf den Untergrund 40, wie beispielhaft im vorliegenden Ausführungsbeispiel, aufweist.

Der Modulträger 14 ist derart angeordnet, dass von der Fahrerposition 36 aus entlang einer, insbesondere entlang der vorgenannten, Fahrzeuglängsrichtung 42 betrachtet in einem Abstand 44 von weniger als 7 m von der Fahrerposition 36 in der Fahrerkabineneinheit 12 der Untergrund 40 sichtbar ist. Der Abstand 44 von der Fahrerposition 36 entlang der Fahrzeuglängsrichtung 42, in dem von der Fahrerposition 36 aus der Untergrund 40 sichtbar ist, ist desto geringer, je kleiner der Sichtwinkel 38 relativ zu der Fahrzeugvertikalrichtung 18, insbesondere je steiler die freie Sichtlinie 98 von der Fahrerposition 36, ist. Der Abstand 44 von der Fahrerposition 36 entlang der Fahrzeuglängsrichtung 42, in dem von der Fahrerposition 36 aus der Untergrund 40 sichtbar ist, ist desto geringer, je geringer der Abstand 86 der Oberkante 24 des Modulträgers 14 parallel zu der Fahrzeugvertikalrichtung 18 von der Fahrzeugaufstandsfläche 22 ist. Insbesondere ist der Modulträger 14 derart angeordnet, dass von der Fahrerposition 36 aus entlang der Fahrzeuglängsrichtung 42 betrachtet in einem Abstand 44 von weniger als 7 m von der Fahrerposition 36, bevorzugt in einem Abstand 44 von weniger als 6,7 m von der Fahrerposition 36, besonders bevorzugt in einem Abstand 44 von weniger als 6,3 m von der Fahrerposition 36 und ganz besonders bevorzugt in einem Abstand 44 von 6 m von der Fahrerposition 36 der Untergrund 40 sichtbar ist, wie beispielhaft im vorliegenden Ausführungsbeispiel. Insbesondere ist der Modulträger 14 derart angeordnet, dass von der Fahrerposition 36 aus entlang der Fahrzeuglängsrichtung 42 betrachtet in einem Abstand 44 von zumindest 5 m von der Fahrerposition 36, bevorzugt in einem Abstand 44 von zumindest 5,3 m von der Fahrerposition 36, besonders bevorzugt in einem Abstand 44 von zumindest 5,6 m von der Fahrerposition 36 und ganz besonders bevorzugt in einem Abstand 44 von 6 m von der Fahrerposition 36 der Untergrund 40 sichtbar ist, wie beispielhaft im vorliegenden Ausführungsbeispiel.

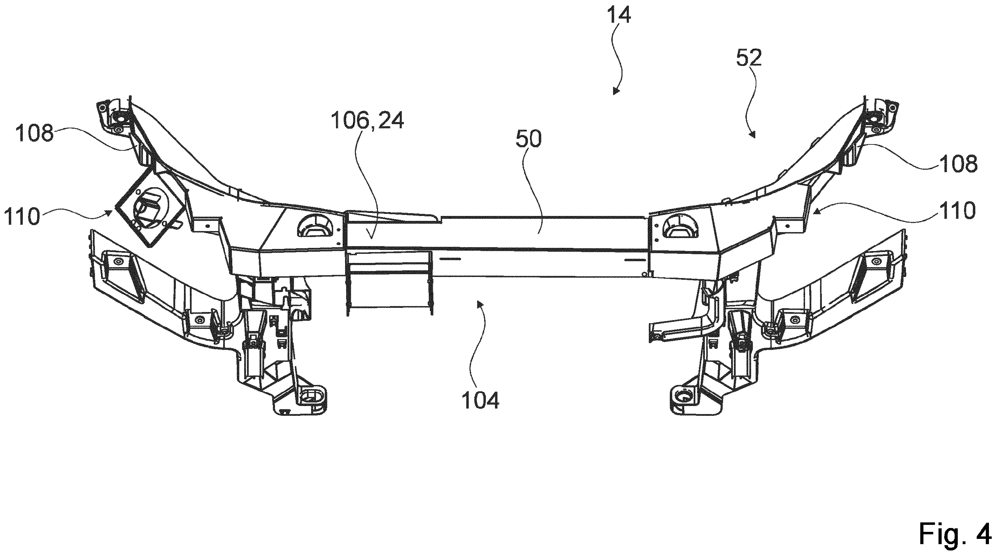

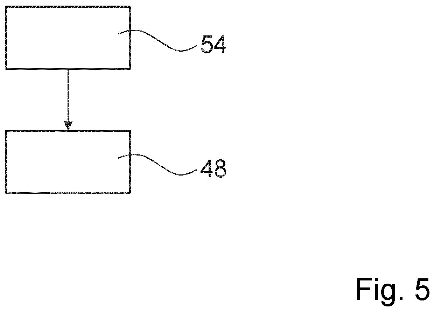

Im Folgenden wird ein Verfahren zur Herstellung der Reisefahrzeugvorrichtung 10, insbesondere des Modulträgers 14, beschrieben, insbesondere anhand der Figuren 4 und 5. Figur 4 zeigt den Modulträger 14 der Reisefahrzeugvorrichtung 10 des Reisefahrzeugs 46 aus Fig. 1 in einer perspektivischen schematischen Darstellung. Der Modulträger 14 ist hergestellt in dem im Folgenden beschriebenen Verfahren. Figur 5 zeigt ein Ablaufdiagramm des Verfahrens zur Herstellung der Reisefahrzeugvorrichtung 10, insbesondere des Modulträgers 14, in einer schematischen Darstellung.

In zumindest einem Verfahrensschritt 48 wird zumindest ein Modifikationsbauteil 50, insbesondere zumindest ein Versteifungselement, an zumindest einem Modulträgergrundkörper 52 befestigt. Das Modifikationsbauteil 50 wird in einem Kühleinheitaufnahmebereich 104 des Modulträgergrundkörpers 52 befestigt, bildet insbesondere einen Kühleinheitaufnahmebereich 104 des Modulträgers 14 aus. Der Modulträger 14 ist dazu vorgesehen, die Kühleinheit 16 in dem Kühleinheitaufnahmebereich 104 aufzunehmen. Die Kühleinheit 16 ist zumindest abschnittsweise an, insbesondere entlang der Fahrzeugvertikalrichtung 18 betrachtet zumindest abschnittsweise unterhalb von dem Modifikationsbauteil 50, angeordnet (vgl. Figur 2). Das Modifikationsbauteil 50 ist als ein Versteifungselement ausgebildet, insbesondere dazu vorgesehen, den Modulträger 14 zu versteifen. Das Modifikationsbauteil 50 ist zumindest teilweise aus einem Stahl, aus einem Aluminium, aus einem Verbundwerkstoff, insbesondere aus einem Kohlefaserverbundwerkstoff, oder aus einem anderen, einem Fachmann als sinnvoll erscheinenden Werkstoff ausgebildet. Das Modifikationsbauteil 50 ersetzt zumindest einen Teil des Modulträgergrundkörpers 52. Das Modifikationsbauteil 50 ist steifer ausgebildet als der Teil des Modulträgergrundkörpers 52, den das Modifikationsbauteil 50 ersetzt. Das Modifikationsbauteil 50 weist parallel zu der Fahrzeugvertikalrichtung 18 betrachtet eine geringere maximale Erstreckung auf als der Teil des Modulträgergrundkörpers 52, den das Modifikationsbauteil 50 ersetzt. Eine Oberkante 106 des Modifikationsbauteils 50 bildet die Oberkante 24 des Modulträgers 14. Das Modifikationsbauteil 50 wird stoffschlüssig mit dem Modulträgergrundkörper 52 verbunden, insbesondere mit dem Modulträgergrundkörper 52 verschweißt. Alternativ oder zusätzlich ist vorstellbar, dass das Modifikationsbauteil 50 formschlüssig mit dem Modulträgergrundkörper 52 verbunden wird, insbesondere mit dem Modulträgergrundkörper 52 verschraubt, vernietet o. dgl. wird. Das Modifikationsbauteil 50 wird an zumindest zwei Seitenteilen 108 des Modulträgergrundkörpers 52 befestigt. Die zumindest zwei Seitenteile 108 des Modulträgergrundkörpers 52 werden an zumindest zwei voneinander abgewandten Endbereichen 110 des Modifikationsbauteils 50 befestigt. Das Modifikationsbauteil 50 ist dazu vorgesehen, die zumindest zwei Seitenteile 108 des Modulträgergrundkörpers 52 zu verbinden.

In zumindest einem weiteren Verfahrensschritt 54 wird der Modulträgergrundkörper 52 nach einem Umformprozess beschnitten. Der Modulträgergrundkörper 52 bleibt nach einem Beschneiden frei von Umformungen. Zumindest ein Teil des Modulträgergrundkörpers 52 wird herausgeschnitten, insbesondere von dem Modulträgergrundkörper 52 entfernt. Der Modulträgergrundkörper 52 wird in dem Kühleinheitaufnahmebereich 104 beschnitten. Der Teil des Modulträgergrundkörpers 52 wird entfernt, der von dem Modifikationsbauteil 50 ersetzt wird. Der weitere Verfahrensschritt 54, in dem der Modulträgergrundkörper 52 beschnitten wird, erfolgt vor dem Verfahrensschritt 48, in dem das Modifikationsbauteil 50 an dem Modulträgergrundkörper 52 befestigt wird. Das Modifikationsbauteil 50 wird in einer endgültigen Form an dem Modulträgergrundkörper 52 befestigt, insbesondere nach einer Befestigung an dem Modulträgergrundkörper 52 nicht mehr beschnitten.

## Patentansprüche

1. Reisefahrzeugvorrichtung, insbesondere Reisemobilvorrichtung, mit zumindest einer Fahrerkabineneinheit (12), die zumindest einen Modulträger (14) zur Aufnahme von Komponenten der Fahrerkabineneinheit (12) und zumindest eine Kühleinheit (16) aufweist, wobei die Kühleinheit (16) parallel zu einer Fahrzeugvertikalrichtung (18) betrachtet zumindest abschnittsweise unterhalb des Modulträgers (14) angeordnet ist und wobei in einem fahrbereiten und unbeladenen Zustand zumindest eine Oberkante (20) der Kühleinheit (16) parallel zu der Fahrzeugvertikalrichtung (18) betrachtet mehr als 95 cm oberhalb einer Fahrzeugaufstandsfläche (22) angeordnet ist, **dadurch gekennzeichnet, dass** in dem fahrbereiten und unbeladenen Zustand zumindest eine Oberkante (24) des Modulträgers (14) parallel zu der Fahrzeugvertikalrichtung (18) betrachtet weniger als 118,5 cm oberhalb der Fahrzeugaufstandsfläche (22) angeordnet ist.

2. Reisefahrzeugvorrichtung nach einem der vorhergehenden Ansprüche, **dadurch gekennzeichnet, dass** die Fahrerkabineneinheit (12) zumindest eine Frontscheibe (26) aufweist, die sich unter einem Winkel (28) von weniger als 34,5° relativ zu der Fahrzeugvertikalrichtung (18) erstreckt.

3. Reisefahrzeugvorrichtung nach Anspruch 2, **dadurch gekennzeichnet, dass** eine Unterkante (30) der Frontscheibe (26) in dem fahrbereiten und unbeladenen Zustand parallel zu der Fahrzeugvertikalrichtung (18) betrachtet weniger als 1,41 m oberhalb der Fahrzeugaufstandsfläche (22) angeordnet ist.

4. Reisefahrzeugvorrichtung nach Anspruch 2 oder 3, **dadurch gekennzeichnet, dass** die Frontscheibe (26) einen minimalen Abstand (32) von kleiner als 39 cm von einer Fahrzeugspitze (34) aufweist.

5. Reisefahrzeugvorrichtung nach einem der vorhergehenden Ansprüche, **dadurch gekennzeichnet, dass** der Modulträger (14) derart angeordnet ist, dass eine Fahrerposition (36) in der Fahrerkabineneinheit (12) einen Sichtwinkel (38) von weniger als 75,3° relativ zu der Fahrzeugvertikalrichtung (18) auf einen Untergrund (40) aufweist.

6. Reisefahrzeugvorrichtung nach Anspruch 5, **dadurch gekennzeichnet, dass** der Modulträger (14) derart angeordnet ist, dass von der Fahrerposition (36) aus entlang einer Fahrzeuglängsrichtung (42) betrachtet in einem Abstand (44) von weniger als 7 m von der Fahrerposition (36) in der Fahrerkabineneinheit (12) der Untergrund (40) sichtbar ist.

7. Reisefahrzeug, insbesondere Reisemobil, mit zumindest einer Reisefahrzeugvorrichtung nach einem der vorhergehenden Ansprüche.

8. Verfahren zur Herstellung einer Reisefahrzeugvorrichtung nach einem der Ansprüche 1 bis 6, insbesondere eines Modulträgers (14) einer Reisefahrzeugvorrichtung nach einem der Ansprüche 1 bis 6, **dadurch gekennzeichnet, dass** in zumindest einem Verfahrensschritt (48) zumindest ein Modifikationsbauteil (50), das als ein Versteifungselement ausgebildet ist, an zumindest einem Modulträgergrundkörper (52) befestigt wird, wobei das Modifikationsbauteil (50) in einem Kühleinheitaufnahmebereich des Modulträgergrundkörpers (52) befestigt wird, wobei das Modifikationsbauteil (50) an zumindest zwei Seitenteilen des Modulträgergrundkörpers (52) befestigt wird, wobei das Modifikationsbauteil (50) einen Teil des Modulträgergrundkörpers (52) ersetzt.

9. Verfahren nach Anspruch 8, **dadurch gekennzeichnet, dass** in zumindest einem Verfahrensschritt (54) der Modulträgergrundkörper (52) nach einem Umformprozess beschnitten wird.

## Claims

1. Travel vehicle device, in particular motorhome device,
with at least one driver's cab unit (12) comprising at least one module carrier (14) for receiving components of the driver's cab unit (12) and at least one cooling unit (16) wherein, viewed parallel to a vehicle vertical direction (18), the cooling unit (16) is arranged at least section-wise below the module carrier (14), and wherein in a ready-to-travel and non-loaded state, at least one upper edge (20) of the cooling unit (16) is arranged more than 95 cm above a vehicle stand surface (22) when viewed parallel to the vehicle vertical direction (18),
**characterized in that** in the ready-to-travel and non-loaded state, at least one upper edge (24) of the module carrier (14) is arranged less than 118.5 cm above the vehicle stand surface (22) when viewed parallel to the vehicle vertical direction (18).

2. Travel vehicle device according to one of the preceding claims,
**characterized in that** the driver's cab unit (12) comprises at least one windscreen (26), which extends at an angle (28) of less than 34.5° relative to the vehicle vertical direction (18).

3. Travel vehicle device according to claim 2,
**characterized in that** in the ready-to-travel and non-loaded state, a lower edge (30) of the windscreen (26) is arranged less than 1.41 m above the vehicle stand surface (22) when viewed parallel to the vehicle vertical direction (18).

4. Travel vehicle device according to claim 2 or 3,
**characterized in that** the windscreen (26) has a minimum distance (32) of less than 39 cm from a vehicle forefront (34).

5. Travel vehicle device according to one of the preceding claims,
**characterized in that** the module carrier (14) is arranged in such a way that a driver's position (36) in the driver's cab unit (12) has a viewing angle (38) onto a ground (40) of less than 75.3° relative to the vehicle vertical direction (18).

6. Travel vehicle device according to claim 5,
**characterized in that** the module carrier (14) is arranged in such a way that viewed from the driver's position (36) along a vehicle longitudinal direction (42), the ground (40) is visible at a distance (44) of less than 7 m from the driver's position (36) in the driver's cab unit (12).

7. Travel vehicle, in particular motorhome, comprising at least one travel vehicle device according to one of the preceding claims.

8. Method for manufacturing a travel vehicle device according to one of claims 1 to 6, in particular a module carrier (14) of a travel vehicle device according to one of claims 1 to 6,
**characterized in that** in at least one method step (48) at least one modification component (50), which is realized as a stiffening element, is fastened to at least one module carrier base body (52),
wherein the modification component (50) is fastened in a cooling unit receiving region of the module carrier base body (52),
wherein the modification component (50) is fastened to at least two side portions of the module carrier base body (52),
wherein the modification component (50) replaces a portion of the module carrier base body (52).

9. Method according to claim 8,
**characterized in that** in at least one method step (54) the module carrier base body (52) is trimmed after a forming process.

## Revendications

1. Dispositif pour véhicule de tourisme, en particulier dispositif pour motor-home de tourisme,
avec au moins une unité cabine de conduite (12), comprenant au moins un support de module (14) pour recevoir des composants de l'unité cabine de conduite (12) et au moins une unité de refroidissement (16), où vue en parallèle à une direction verticale de véhicule (18), l'unité de refroidissement (16) est disposée au moins par sections au-dessous du support de module (14) et où, dans un état vide en ordre de marche, au moins une arête supérieure (20) de l'unité de refroidissement (16), vue en parallèle à la direction verticale de véhicule (18), est disposée par plus de 95 cm au-dessus d'une surface de base du véhicule (22),
**caractérisé en ce que** dans l'état vide en ordre de marche, au moins une arête supérieure (24) du support de module (14), vue en parallèle à la direction verticale de véhicule (18), est disposée par moins de 118,5 cm au-dessus de la surface de base du véhicule (22).

2. Dispositif pour véhicule de tourisme selon l'une des revendications précédentes, **caractérisé en ce que** l'unité cabine de conduite (12) comprend au moins un pare-brise (26) qui s'étend sous un angle (28) de moins de 34,5° par rapport à la direction verticale de véhicule (18).

3. Dispositif pour véhicule de tourisme selon la revendication 2,
**caractérisé en ce que** dans l'état vide en ordre de marche, une arête inférieure (30) du pare-brise (26), vue en parallèle à la direction verticale de véhicule (18), est disposée par moins de 1,41 m au-dessus de la surface de base du véhicule (22).

4. Dispositif pour véhicule de tourisme selon la revendication 2 ou 3,
**caractérisé en ce que** le pare-brise (26) présente une distance minimale (32) de moins de 39 cm d'un devant de véhicule (34).

5. Dispositif pour véhicule de tourisme selon l'une des revendications précédentes, **caractérisé en ce que** le support de module (14) est disposé de telle manière qu'une position de conducteur (36) dans l'unité cabine de conduite (12) présente un angle de vision (38) sur un sol (40) de moins de 75,3° par rapport à la direction verticale de véhicule (18).

6. Dispositif pour véhicule de tourisme selon la revendication 5,
**caractérisé en ce que** le support de module (14) est disposé de telle manière que, vu de la position de conducteur (36) le long d'une direction longitudinale de véhicule (42), le sol (40) est visible à une distance (44) de moins de 7 m de la position de conducteur (36) dans l'unité cabine de conduite (12).

7. Véhicule de tourisme, en particulier motor-home de tourisme, avec au moins un dispositif pour véhicule de tourisme selon l'une des revendications précédentes.

8. Procédé de fabrication d'un dispositif pour véhicule de tourisme selon l'une des revendications 1 à 6, en particulier d'un support de module (14) d'un dispositif pour véhicule de tourisme selon l'une des revendications 1 à 6,
**caractérisé en ce que** dans au moins une étape de procédé (48), au moins un composant de modification (50), qui est réalisé comme élément raidisseur, est fixé sur au moins un corps de base de support de module (52),
où le composant de modification (50) est fixé dans une zone-logement d'unité de refroidissement du corps de base de support de module (52),
où le composant de modification (50) est fixé sur au moins deux parties latérales du corps de base de support de module (52),
où le composant de modification (50) remplace une partie du corps de base de support de module (52).

9. Procédé selon la revendication 8,
**caractérisé en ce que** dans au moins une étape de procédé (54), le corps de base de support de module (52) est découpé après un procès de formage.
